(19) Europäisches Patentamt / European Patent Office / Office européen des brevets

(11) **EP 3 872 721 A1**

(12) **EUROPÄISCHE PATENTANMELDUNG**

(43) Veröffentlichungstag:
**01.09.2021 Patentblatt 2021/35**

(51) Int Cl.:
**G06Q 10/06** (2012.01)     **G06Q 10/04** (2012.01)
**G06Q 10/00** (2012.01)

(21) Anmeldenummer: **20159493.4**

(22) Anmeldetag: **26.02.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder: **Schnittger, Jens**
**91475 Lonnerstadt (DE)**

(54) **VERFAHREN UND SYSTEME ZUM OPTIMIEREN VON WARTUNG INDUSTRIELLER MASCHINEN**

(57)     Die Erfindung betrifft ein Computerimplementiertes Verfahren zur numerischen Optimierung von Wartungsintervallen mindestens einer Komponente einer industriellen Maschine (IM1,IM2, IM3), wobei die Komponente einer zeitabhängigen Belastung ausgesetzt ist, wobei

A) das Ausfallverhalten durch eine Ausfallrate beschrieben wird, wobei die Ausfallrate als eine Funktion von einem Belastungsintegral ausgebildet ist;

B) Ausfallratemessdaten der Komponente für wenigstens eine vorgegebene Last bereitgestellt werden;

C) die Funktion mittels Fittens der Ausfallratemessdaten festgelegt wird;

D) das Belastungsintegral berechnet wird;

E) das Ausfallverhalten anhand der festgelegten Funktion und des berechneten Belastungsintegrals berechnet wird;

F) anhand des berechneten Ausfallverhaltens wenigstens ein optimiertes Wartungsintervall berechnet wird.

FIG 1

**Beschreibung**

Die Erfindung betrifft ein computerimplementiertes Verfahren zur numerischen Optimierung von Wartungsintervallen mindestens einer Komponente einer industriellen Maschine, wobei die Komponente einer zeitabhängigen Belastung ausgesetzt ist.

Die Erfindung betrifft auch ein Verfahren zum Warten mindestens einer Komponente einer industriellen Maschine gemäß den Wartungsintervallen, die mittels des genannten Optimierungsverfahrens ermittelt wurden.

Außerdem betrifft die Erfindung ein Datenverarbeitungssystem, umfassend Mittel zur Ausführung der Schritte des Verfahrens zur numerischen Optimierung von Wartungsintervallen der oben genannten Art.

Darüber hinaus betrifft die Erfindung ein System umfassend mindestens eine industrielle Maschine mit mindestens einer Komponente und ein Datenverarbeitungssystem der oben genannten Art.

Obendrein betrifft die Erfindung ein Computerprogramm, umfassend Befehle, die bei der Ausführung des Programms durch einen Computer diesen veranlassen, die Schritte des Verfahrens der oben genannten Art auszuführen, sowie einen computerlesbaren Datenträger, auf dem ein solches Computerprogramm gespeichert ist, und ein Datenträgersignal, das das Computerprogramm der oben genannten Art überträgt.

Aktuell wird bei Wartung von industriellen Maschinen angenommen, dass die Belastung zeitunabhängig ist. Für eine konstante vorgegebene Belastung kann anhand experimenteller Statistik oder Konstruktionsinformationen eine Wartungsfrequenz ausgerechnet werden. Oft wird eine maximale Stundenanzahl angegeben, die die Komponente der industriellen Maschine beziehungsweise die industrielle Maschine bei der vorgenannten konstanten Last ohne Wartung benutzt werden darf.

Ein Nachteil einer solchen Wartungsplanung besteht darin, dass die Abnutzung wesentlich von der Belastung abhängt, unter der sich die Komponente beziehungsweise die industrielle Maschine befindet. Diese Belastung kann allerdings von einem konkreten Nutzungsszenario abhängen und mit der Zeit variieren. Daher kann die Annahme einer konstanten Belastung (Momentanbelastung) zu einer erheblichen Über- beziehungsweise Unterschätzung der Wartungsintervalle führen. Dies wiederum kann zu einer erhöhten Ausfallrate oder zu erhöhten Wartungskosten führen.

Ein weiterer Nachteil ergibt sich dadurch, dass die Ausfallrate durch lastunabhängiges Altern und durch lastabhängigen Verschleiß bestimmt wird. Heuristische Ausfallratenverteilungen, wie z.B. Weibull-Statistiken, können zum Modellieren dieses komplizierten Verhaltens benutzt werden. Dabei werden die Parameter der Ausfallratenverteilungen anhand in der Vergangenheit, bei einer vorgegebenen konstanten Belastung erhobenen Ausfallstatistik ermittelt und nach dem Ermitteln nicht mehr verändert. Dies führt dazu, dass die auf diese Art und Weise ermittelten Ausfallratenverteilungen nur für diese vorgegebene konstante Belastung gelten. Wird nun die Auslastung der industriellen Maschine verändert, führt dies wiederum entweder zu vermehrten Ausfällen und kostspieligen Stillständen oder zu erhöhten Wartungskosten.

Die Aufgabe der vorliegenden Erfindung besteht darin, die Nutzung der industriellen Maschinen effizienter zu gestalten und gleichzeitig ihre Instandhaltungskosten zu senken.

Die Aufgabe wird mit einem computerimplementierten Verfahren der oben genannten Art erfindungsgemäß dadurch gelöst, dass

A) das Ausfallverhalten durch eine Ausfallrate $\rho_f(t|S)$ beschrieben wird ("S" für "survival" engl.; t ist die Zeit), wobei die Ausfallrate als eine Funktion $f$ von einem Belastungsintegral $L(t)$ ausgebildet ist;

B) Ausfallratemessdaten der Komponente für wenigstens eine vorgegebene Last bereitgestellt werden;

C) die Funktion mittels Anpassung beziehungsweise mittels Fittens der Ausfallratemessdaten festgelegt wird;

D) das Belastungsintegral berechnet wird;

E) das Ausfallverhalten (Statistik) anhand der festgelegten Funktion und des berechneten Belastungsintegrals berechnet wird;

F) anhand des berechneten Ausfallverhaltens wenigstens ein optimiertes Wartungsintervall berechnet wird.

Unter der Ausfallratemessdaten der Komponente für eine vorgegebene Last werden jene Messdaten verstanden, die durch Messen der Ausfallrate der Komponente bei der vorgegebenen Last erhalten werden können. Oft ergeben solche Ausfallmessungen eine Ausfallwahrscheinlichkeit mit einem badewannenförmigen Profil.

Unter der Anpassung/Fitten der Ausfallratemessdaten wird dabei eine Ausgleichsrechnung, beispielsweise Regression, Maximum Likelihood, etc., für Ausfallratemessungsdaten verstanden.

Im Zusammenhang mit der vorliegenden Erfindung wird unter dem Begriff Belastungsintegral ein Integral einer Lastfunktion - auch Momentanlast oder Momentanbelastung genannt - über die Zeit verstanden.

Die Ausfallrate $\rho_f(t|S)$ hängt definitorisch mit der Überlebensfunktion $p_s(t)$ zusammen ("S" für "survival" engl.) wie folgt:

$$\rho_f(t|S) = -\frac{p_s'(t)}{p_s(t)} \tag{1}$$

Die Relation zur Ausfallwahrscheinlichkeitsdichte $\rho_f(t)$ (mit $p_s(t) = 1 - \int_0^t dt' \rho_f(t')$ ) ist gegeben durch

$$\rho_f(t) = \rho_f(t|S)p_s(t) \tag{2}$$

Die Ausfallrate in Schritt A des vorgenannten Verfahrens ist durch folgende Gleichung gegeben:

$$\rho_f(t|S) = -\frac{p_s'(t)}{p_s(t)} = f(L(t)) \tag{3}$$

Dabei ist die Funktion **f** eine feste aber beliebige Funktion, die (nichtnegative) reelle Werte annimmt.

Eine derartige Abhängigkeit der Ausfallrate von dem Belastungsintegral entspricht jenen Situationen, bei denen die Ausfallwahrscheinlichkeit durch den Verschleißzustand bestimmt ist, wobei der Verschleißzustand selbst durch die kumulierte Last bestimmt wird. Der Begriff des Verschleißzustands ist dabei in einem sehr allgemeinen Sinne zu verstehen, wo z.B. auch eine lastunabhängige Alterung subsummiert ist.

Es ist durchaus denkbar, dass das Belastungsintegral L(t) ein Vektor ist. Wenn L(t) ein Vektor ist, bedeutet das, dass verschiedene "lastartige" Kriterien zunächst getrennt berücksichtigt werden können, wobei unterschiedliche Komponenten des L(t)-Vektors unterschiedlichen Kriterien, z.B. bei einem Motor abgefordertes Drehmoment und Drehzahl, beschreiben können.

Der Einfachheit halber wird nachstehend der Fall der skalaren Last erörtert, wobei die nachstehenden Darlegungen ihre Anwendung auf den allgemeinen Fall einer vektoriellen Last *mutatis mutandis* finden.

Oft wird die Situation vorliegen, dass eine vorgegebene vektorielle kumulierte Last ($\vec{L}(t)$) mit Hilfe physikalischer Betrachtungen durch eine schon bekannte Funktion in eine skalare kumulierte Last L(t) (genauer: in einen sich aus allen Lastkomponenten zusammen ergebenden Verschleißzustand) transformiert werden kann. In diesem Fall kann bei dem Belastungsintegral L(t) in Gleichung (3) weiterhin von einer skalaren Funktion ausgegangen werden.

Eine besonders schnelle Anpassung/Fitten kann ermöglicht werden, wenn die wenigstens eine Last eine konstante oder eine stückweise konstante Last ist.

Im Zusammenhang mit der vorliegenden Erfindung wird unter dem Begriff "Last" beziehungsweise "Lastfunktion" eine momentane Last verstanden - auch bekannt als Momentanlast oder Momentanbelastung. Im Gegensatz dazu bezeichnet der Begriff kumulierte Last, oder Belastungsintegral, eine über die Zeit integrierte Momentanbelastung. Z.B. ergibt sich bei einer konstanten Last l für das Belastungsintegral das Ergebnis l*t, genauso sind aber z.B. periodische Lastfunktionen denkbar.

Hinsichtlich der Genauigkeit der Anpassung kann es zweckdienlich sein, wenn die Ausfallratemessdaten der Komponente für zwei oder mehr vorgegebene, vorzugsweise unterschiedliche Lasten bereitgestellt werden. Es können z.B. unterschiedliche konstante Lasten sein.

Besonders gute Ergebnisse können erzielt werden, wenn die Funktion $f(x)$ als eine mindestens einparametrige Familie von vorzugsweise stetigen Wahrscheinlichkeitsverteilungen ausgebildet ist, insbesondere als eine mehrparametrige, beispielsweise dreiparametrige modifizierte Weibull-Verteilung ausgebildet ist

Die dreiparametrige modifizierte Weibull-Verteilung ist gegeben durch eine Ausfallrate der Form (siehe "Extended Weibull distributions in reliability engineering", Tang Yong, National University of Singapore, PhD thesis 2004. http://scholarbank.nus.sg/bitstream/handle/10635/14186/TangY. pdf?sequence=1) :

$$f(x) = a'(b' + \lambda'x)x^{b'-1}e^{\lambda'x} \tag{4}$$

In der direkten Anwendung von Gl. (4) - d.h. ohne deren Anpassung für nichtkonstante Lastverläufe - für die Beschreibung von Ausfallraten entspricht x der Zeit und ist aus dem Stand der Technik bekannt (siehe zitierte Doktorarbeit).

Erfindungsgemäß ist die Ausfallrate als eine Funktion *f* von einem Belastungsintegral L(*t*) ausgebildet (siehe Gl. (3)), sodass bei dem beschriebenen Beispiel, in dem die Funktion *f* als die dreiparametrige modifizierte Weibull-Verteilung nach Gleichung (4) ausgebildet ist, x der kumulierten Last L(t) gleich ist.

Die in Gleichung (4) dargestellte Funktion beschreibt sehr gut die Ausfallwahrscheinlichkeiten bzw. Ausfallraten, die bei einer konstanten Last l aufgenommen wurden (solche Ausfallratemessdaten können beispielsweise einen badewannenförmigen Verlauf aufweisen). In diesem Fall ergibt sich

$$\rho_f(t|S) = a(b + \lambda t)t^{b-1}e^{\lambda t} = f(lt) \qquad (5)$$

und

$$a' := al^{-b+1}, \quad b' := b, \quad \lambda' := \lambda/l .$$

Dabei sind die Parameter a, b und λ lastenabhängig gemäß der angegebenen Formel, wogegen *a'*, *b'* und λ' unabhängig von l sind; ihre Werte können bei dem Fitten an die konkreten Messdaten ermittelt werden.

Somit kann bei einer Ausführungsform vorgesehen sein, dass beim Festlegen der Funktion *f(x)* durch Fitten der Ausfallratemessdaten, die Parameter der Funktion *f(x)* mittels der Maximum-Likelihood-Methode ermittelt werden.

Das Belastungsintegral beziehungsweise die Lastfunktion kann beispielsweise einen Degradationszustand der Komponente der industriellen Maschine definieren. Dabei kann bei der Angabe beziehungsweise bei der Festlegung des Belastungsintegrals oder der Lastfunktion Effekte der Alterung (zu engl. "aging effects"), der Ermüdung, dem Verschleiß etc. Rechnung getragen werden.

Das Belastungsintegral kann beispielsweise anhand eines beispielsweise zukünftigen Arbeitsplans der industriellen Maschine berechnet werden, bei dem die (geplante) Auslastung der Komponente der Maschine beschrieben ist.

Sobald die Funktion *f(x)*, wie bereits eingehend beschrieben, anhand historischer Ausfallratemessdaten festgelegt wurde, kann das Belastungsintegral L(t) für die Zukunft berechnet / festgelegt werden und in die Gleichung (3) eingesetzt werden, um die Statistik des Ausfallverhaltens für die Zukunft zu berechnen und somit die künftigen Ausfallraten prognostizieren zu können.

Anhand dieser Prognose (in die Zukunft berechneten Ausfallraten) lässt sich nun wenigstens ein Wartungsintervall oder mehrere, vorzugsweise alle Wartungsintervalle für die mindesten eine Komponente einer industriellen Maschine numerisch optimieren. Dabei können (müssen aber nicht) aus den Ausfallraten je nach Bedarf eine oder mehrere statistische Größen (Parameter) errechnet werden, um basierend auf diesen die optimierten Wartungsintervalle bzw. Wartungsintervalllängen zu berechnen.

Basierend auf optimierten Wartungsintervallen kann die Produktion innerhalb einer oder mehreren Industrieanlagen entsprechend gesteuert/optimiert werden, indem ein Bediener oder ein nachstehend beschriebenes System industrielle Maschine(n) innerhalb der Industrieanlage(n) zu einem gemäß den optimierten Wartungsintervallen berechneten Zeitpunkt händisch oder automatisch stoppt, worauf dann der Wartungsvorgang folgt.

An dieser Stelle sei angemerkt, dass typischerweise die Ausfallratemessungen der Komponente, die zu den Ausfallratemessdaten führen, - auch beim vorgenannten Verfahren zur numerischen Optimierung von Wartungsintervallen - bei vorgegebenen Wartungsintervalllängen durchgeführt werden. Beispielsweise können die vorgegebenen (nicht optimierten) Wartungsintervalllängen alle gleich sein - z.B. von dem Hersteller der Komponente festgelegt/vorgeschrieben sein.

Da die berechnete Statistik des Ausfallverhaltens von dem berechneten, z.B. geplanten, Belastungsintegral abhängt, sind die optimierten Wartungsintervalle lastabhängig.

Beispielsweise können die Ausfallratenmessungen bei wenigstens einer vorgegebenen Last und bei vorgegebenen Wartungsintervalllängen erhoben werden.

Bei einer Ausführungsform kann mit Vorteil vorgesehen sein, dass die (lastabhängige) Wartungsintervalle präventive Instandhaltungsintervalle sind, insbesondere kostenoptimierte präventive Instandhaltungsintervalle sind.

Ein kostenoptimiertes vorbeugendes Wartungsintervall $T_{opt}$ kann beispielsweise mithilfe folgender Gleichung berechnet werden (siehe z.B. "Ingénierie de la maintenance : De la conception à l'exploitation d'un bien". Jean-Claude Francastel; Dunod, L'Usine Nouvelle 2009 (2. edition), Kap. 5.3):

$$\frac{\partial}{\partial T}\Big|_{T_{opt}} < C >_\infty = 0 \qquad (6)$$

wobei

$$< C >_{\infty} := \lim_{t \to \infty} \frac{<c(t)>}{t} = \frac{c_p p_p + c_u(1-p_p)}{\int_0^T dt' p_s(t')}$$

$c_p$ und $c_u$ Wartungskosten sind, die bei einem geplanten oder bei einem ungeplanten Wartungsereignis entstehen, und

$$p_p := p_s(T)$$

$$p_s(t) := 1 - \int_0^t dt' \rho_f(t')$$

Da die errechnete Ausfallrate lastabhängig ist, sind die kostenoptimierten präventiven Instandhaltungsintervalle ebenfalls lastabhängig.

Im Zusammenhang mit der vorliegenden Erfindung wird unter dem Begriff Wartungsintervall einer Komponente ein Zeitabstand zwischen Inbetriebnahme der Komponente und der ersten planmäßigen/vorbeugenden Wartung beziehungsweise zwischen zwei planmäßigen Wartungen verstanden. Dabei ist diese Art Wartung nicht mit einer Reparatur zu verwechseln, da eine Reparatur eine korrigierende Wartung ist.

Darüber hinaus kann mit Vorteil vorgesehen sein, dass

G) für das wenigstens eine optimierte Wartungsintervall weitere Ausfallratemessdaten erhoben werden, und
H) die Schritte A bis F wiederholt werden, wobei die Ausfallratemessdaten in Schritt A zusätzlich die weiteren Ausfallratemessdaten umfassen.

Durch Aufnehmen der Ausfallratemessdaten, die bei den bereits optimierten Wartungsintervalllängen erhoben wurden, als Eingangs-Ausfallratemessdaten kann die Optimierung der Wartungsintervalllängen sukzessiv weiter verbessert werden.

Die Aufgabe der Erfindung wird außerdem mit einem Verfahren zum Warten mindestens einer Komponente einer industriellen Maschine dadurch gelöst, dass für die mindestens eine Komponente der industriellen Maschine wenigstens ein, vorzugsweise mehrere, insbesondere alle Wartungsintervalle wie oben beschrieben optimiert werden und die mindestens eine Komponente gemäß den optimierten Wartungsintervallen gewartet wird.

Es kann dabei zweckdienlich sein, wenn das Erreichen des Endes des Wartungsintervalls an einen Bediener der industriellen Maschine, insbesondere in Form einer Warnung, signalisiert wird und/oder beim Überschreiten eines optimierten Wartungsintervalls (planmäßige Wartung nicht durchgeführt) die zumindest eine Komponente und/oder die industrielle Maschine von einem Bediener oder von einem nachstehend beschriebenen System automatisch abgeschaltet wird.

Die Aufgabe der Erfindung wird außerdem mit einem Datenverarbeitungssystem gelöst, welches Mittel zur Ausführung der Schritte des oben beschriebenen computerimplementierten Verfahrens zur Optimierung von Wartungsintervallen mindestens einer Komponente einer industriellen Maschine umfasst.

Die Aufgabe der Erfindung wird außerdem mit einem Computerprogramm gelöst, das Befehle umfasst, die bei der Ausführung des Programms durch einen Computer diesen veranlassen, die Schritte des vorgenannten Verfahrens zur Optimierung von Wartungsintervallen auszuführen.

Dieses Computerprogramm kann insofern ein Teil des Datenverarbeitungssystems sein, als es auf einem Computer, z.B. einem Server, des Datenverarbeitungssystems gespeichert sein und ausgeführt werden kann.

Die Aufgabe der Erfindung wird außerdem mit einem System umfassend mindestens eine industrielle Maschine mit mindestens einer Komponente und ein vorhin beschriebenes Datenverarbeitungssystem. Dabei ist das Datenverarbeitungssystem dazu eingerichtet, mit der mindestens einen industriellen Maschine Daten auszutauschen, um insbesondere Ausfallratemessdaten der Komponente für wenigstens eine vorgegebene Last zu erheben bzw. zu erhalten und die optimierten Wartungsintervalle an der industriellen Maschine zu implementieren.

Bei einer Ausführungsform kann vorgesehen sein, dass das System automatisiert ist und beispielsweise dazu eingerichtet ist, beim Überschreiten von Wartungsintervallen (planmäßige Wartung nicht durchgeführt) die entsprechende Komponente und/oder die industrielle Maschine automatisch abzuschalten.

Die Erfindung samt weiteren Vorteilen ist im Folgenden an Hand beispielhafter Ausführungsformen näher erläutert, die in der Zeichnung veranschaulicht sind. In dieser zeigt

FIG 1  eine industrielle Umgebung mit mehreren industriellen Maschinen, deren Wartungsintervalle optimiert werden können, und

FIG 2    ein Ablaufdiagramm eines Verfahrens zur Optimierung von Wartungsintervallen.

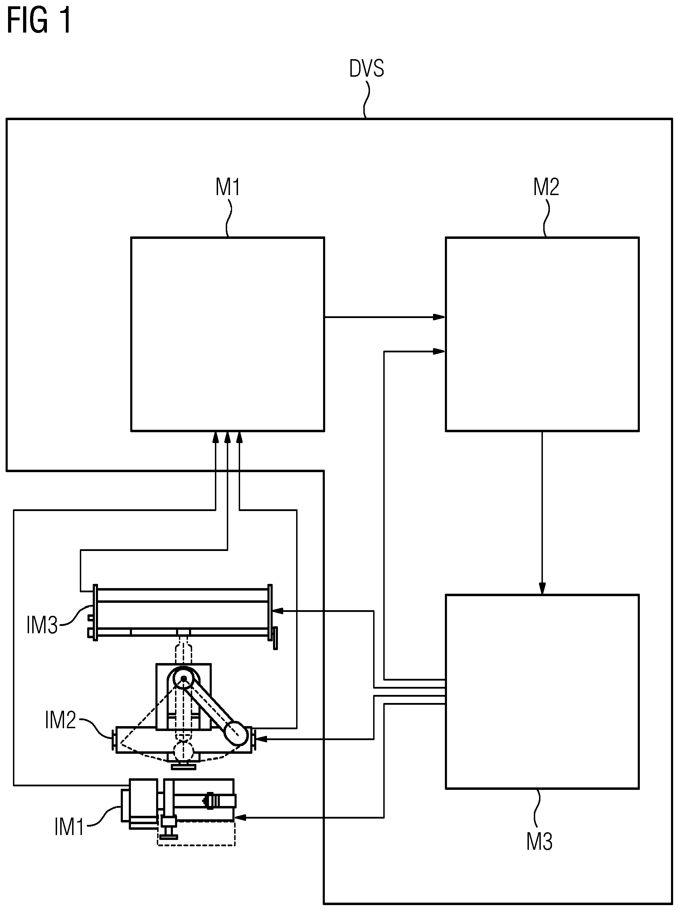

Zunächst wird auf FIG 1 Bezug genommen. FIG 1 zeigt insbesondere ein Datenverarbeitungssystem DVS, das mit mehreren industriellen Maschinen IM1, IM2, IM3 interagiert und Daten austauschen kann. Beispielsweise kann das Datenverarbeitungssystem DVS mehrere Module - beispielsweise ein erstes M1, ein zweites M2 und ein drittes Modul M3 - umfassen, die jeweils eine Reihe von spezifischen Aufgaben erfüllen können.

An diese Stelle sei angemerkt, dass das Datenverarbeitungssystem DVS eine Kombination aus Soft- und Hardware-Komponenten umfassen kann.

Das erste Modul M1 kann beispielsweise dazu eingerichtet sein, Daten, z.B. Ausfallratemessdaten von den industriellen Maschinen IM1, IM2, IM3 zu empfangen (Schritt B), diese zu speichern und zu verarbeiten. Beispielsweise kann das erste Modul M1 dazu eingerichtet sein, die Ausfallratemessdaten zu fitten und anhand dieser Rechnung eine Funktion $f$ zu bestimmen (Schritt C).

Die Ausfallratemessdaten können einen Verlauf mit einem badewannenförmigen Profil aufweisen. Dabei kann das erste Modul M1 die badewannenförmigen Kurven mit einer dreiparametrigen modifizierten Weibull-Verteilung fitten und die drei Parameter a', b' und λ' bestimmen, die die dreiparametrige modifizierte Weibull-Verteilung festlegen. Wie eingangs erwähnt, eignet sich die dreiparametrige modifizierte Weibull-Verteilung besonders gut für den Fall, wenn Betriebsbedingungen einer konstanten Last oder einer stückweise konstanten Last entsprechen.

Für das Annähern der Ausfallratemessdaten kann es von Vorteil sein, wenn die Ausfallratemessdaten der Komponente für zwei oder mehr vorgegebene, vorzugsweise unterschiedliche Lasten bereitgestellt werden. In diesem Fall kann das Datenverarbeitungssystem DVS - hier mittels des ersten Moduls M1 - die Genauigkeit des Ausgleichungsverfahrens, z.B. des Fittens, erhöhen, weil mehr Messdaten vorliegen, und beispielsweise die Parameter a', b' und λ' genauer bestimmen.

Das zweite Modul M2 kann beispielsweise dazu eingerichtet sein, ein Belastungsintegral L(t), das bei dem Berechnen des Ausfallverhaltens der Komponenten der industriellen Maschinen IM1, IM2, IM3 - also bei Schritt E - verwendet werden sollte, zu berechnen und somit Schritt D auszuführen. Die (künftigen) Arbeitspläne für die Berechnung einer zeitabhängigen Belastung und des Belastungsintegrals können beispielsweise von dem dritten Modul M3 entworfen und dem zweiten Modul M2 zur Verfügung gestellt bzw. an das zweite Modul M2 übermittelt werden. Das dritte Modul M3 ermittelt dabei Arbeitspläne, z.B. Informationen über den Einsatz der industriellen Maschinen IM1, IM2, IM3 für die kommende Woche / zwei Wochen / den kommenden Monat. Die Ermittlung der Arbeitspläne kann anhand von vorgegebenen (noch nichtoptimierten) Wartungsintervallen erfolgen. Anschließend sendet das dritte Modul M3 diese (nichtoptimierten) Arbeitspläne an das zweite Modul M2, damit das zweite Modul M2 die zeitabhängige Belastung und das Belastungsintegral L(t) berechnen kann (Ausführung von Schritt D) .

Die Vorschrift, die Ausfallrate $\rho_f(t|S)$ als eine Funktion $f$ von dem Belastungsintegral $L(t)$ zu berechnen, kann beispielsweise in dem zweiten Modul M2 vorliegen, z.B. gespeichert sein. Dabei ist die Funktion $f$ bei der in dem zweiten Modul M2 vorliegenden Vorschrift a priori nicht bekannt (Vorschrift mit einer unbekannten Funktion, die es zunächst festzulegen gilt). Die Funktion $f$ wird in dem vorliegenden Beispiel mittels des ersten Moduls M1 festgelegt/ermittelt und an das zweite Modul M2, z.B. in Form von drei Parametern a', b' und λ', übermittelt. Anschließend kann das zweite Modul M2 Schritt E ausführen und die Ausfallrate $\rho_f(t|S)$ anhand der Funktion $f$ und des Belastungsintegrals $L(t)$ (Gl. (3)) berechnen.

Die Gleichung (3) gilt für beliebige Belastungsintegrale L(t) und somit für beliebige mit der Zeit variierende Betriebsbedingungen der industriellen Maschinen IM1, IM2, IM3.

Anhand des nun berechneten Ausfallverhaltens können Wartungsintervalle optimiert werden (Schritt F). Dies kann beispielsweise mittels des zweiten Moduls M2 ausgeführt werden.

Wie bereits erwähnt, berücksichtigt das dritte Modul M3 beim Entwerfen der Arbeitspläne Wartungsintervalle. Z.B. kann das dritte Modul M3 Arbeitspläne in Abhängigkeit von den optimierten Wartungsintervallen entwerfen, die das dritte Modul M3 von dem zweiten Modul M2 erhalten (zur Verfügung gestellt bekommen bzw. übermittelt bekommen) kann.

Vorzugsweise ist das dritte Modul M3 ferner dazu eingerichtet, die (anhand der optimierten Wartungsintervalle) entworfenen Arbeits- bzw. Produktionspläne (inkl. Wartungspläne) umzusetzen, indem es beispielsweise die industriellen Maschinen IM1, IM2, IM3 entsprechend steuert oder eine entsprechende Steuerung der industriellen Maschinen IM1, IM2, IM3 veranlasst. Dies kann entweder automatisch oder mithilfe eines Bedieners geschehen.

An dieser Stelle sei angemerkt, dass die Module M1, M2, M3 in Form von einer Hard- oder/und Software vorliegen können, z.B. als Teile eines Softwareprogramms ausgebildet sein können.

Sie können (müssen aber nicht) auch als baulich getrennte Recheneinheiten ausgebildet sein, die mit Mitteln ausgestattet sind, die zur Durchführung der hier beschriebenen Funktionen konfiguriert sind.

Das Datenverarbeitungssystem DVS kann beispielsweise den Benutzer der industriellen Maschinen IM1, IM2, IM3 auf eine bevorstehende Wartung aufmerksam machen, indem es z.B. dies dem Benutzer signalisiert. Das Signalisieren kann in Form von sich wiederholender Ton- und/oder Videosignalen ablaufen, wobei die Frequenz der Signale erhöht werden kann, je näher der bevorstehende Wartungstermin rückt.

Optional können nach dem Umsetzen des optimierten Wartungsplans weitere Ausfallratemessungen durchgeführt werden, um weitere Ausfallratemessdaten zu erhalten (Schritt G). Die weiteren Ausfallratemessdaten können zur Verbesserung der Optimierung dienen, indem die Schritte A bis F wiederholt werden, wobei die weiteren Ausfallratemessdaten als Teil der Eingangs-Ausfallratemessdaten in Schritt A verwendet werden (Schritt H).

Basierend auf den optimierten Wartungsintervallen kann die Produktion einer beispielsweise automatisierten Industrieanlage optimiert werden. Dies kann beispielsweise durch Umsetzen von mithilfe von den optimierten Wartungsintervallen ermittelten (optimierten) Arbeitsplänen erfolgen. Das Umsetzen kann z.B. durch ein der Industrieanlage übergeordnetes System automatisch oder mithilfe von Bedienpersonal erfolgen.

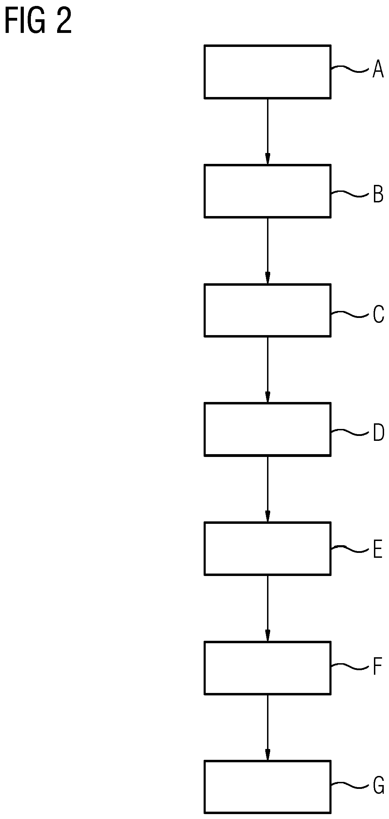

FIG 2 zeigt Ablaufdiagramme eines computerimplementierten Verfahrens zur Optimierung von Wartungsintervallen.

Gemäß FIG 2 wird in einem Schritt A das Ausfallverhalten durch eine Ausfallrate beschrieben, wobei die Ausfallrate als eine Funktion von einem Belastungsintegral ausgebildet ist. Im Schritt B werden Ausfallratemessdaten der Komponente für wenigstens eine vorgegebene Last bereitgestellt. In Schritt C wird die Funktion mittels Fittens der Ausfallratemessdaten festgelegt. In Schritt D wird das (beispielsweise anhand eines künftigen Betriebsplans) Belastungsintegral berechnet. In Schritt E wird das Ausfallverhalten anhand der festgelegten Funktion und des berechneten Belastungsintegrals berechnet. In Schritt F wird ein daraus abgeleitetes optimiertes Wartungsintervall berechnet.

Optional können in Schritt G weitere Ausfallratemessungen für das wenigstens eine optimierte Wartungsintervall durchgeführt werden, um weitere Ausfallratemessdaten zu erhalten, wobei in Schritt H die Schritte A bis F wiederholt werden, wobei die Ausfallratemessdaten in Schritt A zusätzlich die weiteren Ausfallratemessdaten umfassen.

Zusammenfassend betrifft die Erfindung Verfahren und Systeme, bei den Wartung von Komponenten und somit Wartung einer oder auch mehrerer Industrieanlagen optimiert werden kann.

Es ist ersichtlich, dass Abänderungen und/oder Hinzufügungen von Teilen an den zuvor beschriebenen Verfahren und Systemen erfolgen können, ohne dass vom Gebiet und Umfang der vorliegenden Erfindung abgewichen wird. Ebenfalls ersichtlich ist, dass die Erfindung zwar in Bezug auf konkrete Beispiele beschrieben worden ist, ein Fachmann jedoch sicher in der Lage sein sollte, viele andere entsprechende Formen der Verfahren und der Systeme zu erhalten, die die in den Ansprüchen dargelegten Eigenschaften aufweisen und damit alle in den dadurch festgelegten Schutzumfang fallen.

Die Bezugszeichen in den Ansprüchen dienen lediglich zum besseren Verständnis der vorliegenden Erfindung und bedeuten auf keinen Fall eine Beschränkung der vorliegenden Erfindung.

**Patentansprüche**

1. Computerimplementiertes Verfahren zur numerischen Optimierung von Wartungsintervallen mindestens einer Komponente einer industriellen Maschine (IM1,IM2,IM3), wobei die Komponente einer zeitabhängigen Belastung ausgesetzt ist, wobei

   A) das Ausfallverhalten durch eine Ausfallrate beschrieben wird, wobei die Ausfallrate als eine Funktion von einem Belastungsintegral ausgebildet ist;
   B) Ausfallratemessdaten der Komponente für wenigstens eine vorgegebene Last bereitgestellt werden;
   C) die Funktion mittels Fittens der Ausfallratemessdaten festgelegt wird;
   D) das Belastungsintegral berechnet wird;
   E) das Ausfallverhalten anhand der festgelegten Funktion und des berechneten Belastungsintegrals berechnet wird;
   F) anhand des berechneten Ausfallverhaltens wenigstens ein optimiertes Wartungsintervall berechnet wird.

2. Verfahren nach Anspruch 1, wobei die wenigstens eine Last eine konstante oder eine stückweise konstante Last ist.

3. Verfahren nach Anspruch 1 oder 2, wobei die Ausfallratemessdaten der Komponente für zwei oder mehr vorgegebene, vorzugsweise unterschiedliche Lasten bereitgestellt werden.

4. Verfahren nach einem der Ansprüche 1 bis 3, wobei die Funktion als eine mindestens einparametrige Familie von vorzugsweise stetigen Wahrscheinlichkeitsverteilungen ausgebildet ist, insbesondere als eine mehrparametrige, beispielsweise dreiparametrige modifizierte Weibull-Verteilung ausgebildet ist.

5. Verfahren nach einem der Ansprüche 1 bis 4, wobei bei dem Festlegen der Funktion mittels Fittens der Ausfallratemessdaten, die Parameter der Funktion mittels der Maximum-Likelihood-Methode ermittelt werden.

**6.** Verfahren nach einem der Ansprüche 1 bis 5, wobei das Belastungsintegral aus einem Arbeitsplan der industriellen Maschine berechnet wird.

**7.** Verfahren nach einem der Ansprüche 1 bis 6, wobei die Wartungsintervalle prädiktive Instandhaltungsintervalle sind, insbesondere kostenoptimierte präventive Instandhaltungsintervalle sind.

**8.** Verfahren nach einem der Ansprüche 1 bis 7, wobei

G) für das wenigstens eine optimierte Wartungsintervall weitere Ausfallratemessungen durchgeführt werden, um weitere Ausfallratemessdaten zu erhalten, und
H) die Schritte A bis F wiederholt werden, wobei die Ausfallratemessdaten in Schritt A zusätzlich die weiteren Ausfallratemessdaten umfassen.

**9.** Verfahren zum Warten mindestens einer Komponente einer industriellen Maschine (IM1,IM2,IM3), wobei für die mindestens eine Komponente der industriellen Maschine wenigstens ein, vorzugsweise mehrere, insbesondere alle Wartungsintervalle nach einem der Ansprüche 1 bis 8 optimiert werden und die mindestens eine Komponente gemäß den optimierten Wartungsintervallen gewartet wird, wobei beispielsweise das Erreichen des Endes des Wartungsintervalls an einen Benutzer der industriellen Maschine, insbesondere in Form einer Warnung, signalisiert wird und/oder beim Überschreiten des Wartungsintervalls die zumindest eine Komponente und/oder die industrielle Maschine abgeschaltet wird.

**10.** Datenverarbeitungssystem, umfassend Mittel zur Ausführung der Schritte des Verfahrens nach einem der Ansprüche 1 bis 8.

**11.** System umfassend mindestens eine industrielle Maschine (IM1,IM2,IM3) mit mindestens einer Komponente und ein Datenverarbeitungssystem nach Anspruch 10, wobei das Datenverarbeitungssystem (DVS) dazu eingerichtet ist, mit der mindestens einen industriellen Maschine Daten (IM1,IM2,IM3) auszutauschen, um insbesondere Ausfallratemessdaten der Komponente für wenigstens eine vorgegebene Last zu erheben und die optimierten Wartungsintervalle an der industriellen Maschine (IM1,IM2,IM3) zu implementieren.

**12.** Computerprogramm, umfassend Befehle, die bei der Ausführung des Programms durch einen Computer diesen veranlassen, die Schritte des Verfahrens nach einem der Ansprüche 1 bis 8 auszuführen.

**13.** Computerlesbarer Datenträger, auf dem das Computerprogramm nach Anspruch 12 gespeichert ist.

**14.** Datenträgersignal, das das Computerprogramm nach Anspruch 12 überträgt.

FIG 1

## FIG 2

Europäisches
Patentamt

European
Patent Office

Office européen
des brevets

**EUROPÄISCHER RECHERCHENBERICHT**

Nummer der Anmeldung

EP 20 15 9493

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2018/240080 A1 (MISRA SHAKTI PRASAD [IN] ET AL) 23. August 2018 (2018-08-23) * Absatz [0012]; Ansprüche 1-10; Abbildung 1 * * Absatz [0028] - Absatz [0046] * | 1-14 | INV. G06Q10/06 G06Q10/04 G06Q10/00 |
| X | US 2016/282231 A1 (KEENE KEVIN [US] ET AL) 29. September 2016 (2016-09-29) * Anspruch 1; Abbildungen 1-3 * | 1-14 | |
| X | US 2008/228314 A1 (SJOSTRAND NICLAS [SE] ET AL) 18. September 2008 (2008-09-18) * Absatz [0061] - Absatz [0069]; Ansprüche 1-9 * | 1-14 | |
| X | EP 3 483 803 A1 (GE ENERGY POWER CONVERSION TECH LTD [GB]) 15. Mai 2019 (2019-05-15) * Absatz [0051] - Absatz [0083]; Ansprüche 1-7 * | 1-14 | |
| X | EP 2 538 376 A1 (TURBOMECA [FR]) 26. Dezember 2012 (2012-12-26) * Zusammenfassung * * Absatz [0009] - Absatz [0045] * | 1-14 | RECHERCHIERTE SACHGEBIETE (IPC) G06Q |
| X | WO 2017/106919 A1 (SUEZ WATER & TREAT SOLUTIONS PTY LTD [AU]) 29. Juni 2017 (2017-06-29) * Absatz [0056] - Absatz [0086]; Ansprüche 1-8 * | 1-14 | |
| X | US 2017/103782 A1 (NAVE SHAWN M [US] ET AL) 13. April 2017 (2017-04-13) * Absatz [0015] - Absatz [0025]; Ansprüche 1-8 * | 1-14 | |

-/--

Der vorliegende Recherchenbericht wurde für alle Patentansprüche erstellt

| Recherchenort | Abschlußdatum der Recherche | Prüfer |
|---|---|---|
| München | 7. Mai 2020 | Lavin Liermo, Jesus |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

Seite 1 von 2

**Europäisches Patentamt**
**European Patent Office**
**Office européen des brevets**

## EUROPÄISCHER RECHERCHENBERICHT

Nummer der Anmeldung

EP 20 15 9493

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 108 710 946 A (UNIV QINGDAO AGRICULTURAL) 26. Oktober 2018 (2018-10-26) * Zusammenfassung * * Absatz [0004] - Absatz [0035] * ----- | 1-14 | |
| X | US 2009/259507 A1 (MIWA HIROBUMI [JP] ET AL) 15. Oktober 2009 (2009-10-15) * Ansprüche 1-3; Abbildungen 1-4 * ----- | 1-14 | |
| X | US 2006/036344 A1 (LIU JUAN [US] ET AL) 16. Februar 2006 (2006-02-16) * Ansprüche 1-11; Abbildungen 1-5 * ----- | 1-14 | |
| X | WO 2013/141797 A2 (SCANIA CV AB [SE]) 26. September 2013 (2013-09-26) * Zusammenfassung; Ansprüche 1-7 * ----- | 1-14 | |
| X | EP 3 155 490 A1 (SIEMENS AG [DE]) 19. April 2017 (2017-04-19) * Ansprüche 1-6 * ----- | 1-14 | |
| X | US 2019/179299 A1 (CULBERTSON JON ROBERT [US] ET AL) 13. Juni 2019 (2019-06-13) * Ansprüche 1-7; Abbildung 2 * ----- | 1-14 | |
| X | US 2019/196430 A1 (SEO SUNG MOK [KR] ET AL) 27. Juni 2019 (2019-06-27) * Absatz [0090] - Absatz [0214] * ----- | 1-14 | |
| X | US 2009/132321 A1 (KAMISUWA YOSHIKATSU [JP] ET AL) 21. Mai 2009 (2009-05-21) * Absatz [0031] - Absatz [0032] * ----- | 1-14 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 7. Mai 2020 | Lavin Liermo, Jesus |

EPO FORM 1503 03.82 (P04C03)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................
& : Mitglied der gleichen Patentfamilie, übereinstimmendes Dokument

**ANHANG ZUM EUROPÄISCHEN RECHERCHENBERICHT**
**ÜBER DIE EUROPÄISCHE PATENTANMELDUNG NR.**                    EP 20 15 9493

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-05-2020

| Im Recherchenbericht angeführtes Patentdokument | Datum der Veröffentlichung | Mitglied(er) der Patentfamilie | Datum der Veröffentlichung |
|---|---|---|---|
| US 2018240080 A1 | 23-08-2018 | KEINE | |
| US 2016282231 A1 | 29-09-2016 | EP 3274222 A1 | 31-01-2018 |
| | | US 2016282231 A1 | 29-09-2016 |
| | | WO 2016154208 A1 | 29-09-2016 |
| US 2008228314 A1 | 18-09-2008 | CN 101256404 A | 03-09-2008 |
| | | EP 1965281 A1 | 03-09-2008 |
| | | US 2008228314 A1 | 18-09-2008 |
| EP 3483803 A1 | 15-05-2019 | EP 3483803 A1 | 15-05-2019 |
| | | US 2019147413 A1 | 16-05-2019 |
| EP 2538376 A1 | 26-12-2012 | AU 2012274140 A1 | 16-01-2014 |
| | | CA 2837523 A1 | 27-12-2012 |
| | | CN 103597504 A | 19-02-2014 |
| | | EP 2538376 A1 | 26-12-2012 |
| | | JP 6189290 B2 | 30-08-2017 |
| | | JP 2014523828 A | 18-09-2014 |
| | | KR 20140045367 A | 16-04-2014 |
| | | KR 20180114255 A | 17-10-2018 |
| | | MX 346751 B | 30-03-2017 |
| | | PL 2538376 T3 | 29-11-2019 |
| | | RU 2013156691 A | 27-07-2015 |
| | | SG 195131 A1 | 30-12-2013 |
| | | US 2014207726 A1 | 24-07-2014 |
| | | WO 2012175521 A1 | 27-12-2012 |
| | | ZA 201308876 B | 26-08-2015 |
| WO 2017106919 A1 | 29-06-2017 | AU 2016377392 A1 | 10-05-2018 |
| | | CA 3001886 A1 | 29-06-2017 |
| | | CN 108496196 A | 04-09-2018 |
| | | EP 3394821 A1 | 31-10-2018 |
| | | SG 11201803040T A | 30-05-2018 |
| | | WO 2017106919 A1 | 29-06-2017 |
| US 2017103782 A1 | 13-04-2017 | US 9530123 B1 | 27-12-2016 |
| | | US 9601155 B1 | 21-03-2017 |
| CN 108710946 A | 26-10-2018 | KEINE | |
| US 2009259507 A1 | 15-10-2009 | AU 2006295772 A1 | 05-04-2007 |
| | | CA 2623640 A1 | 05-04-2007 |
| | | JP 4717579 B2 | 06-07-2011 |
| | | JP 2007100305 A | 19-04-2007 |
| | | US 2009259507 A1 | 15-10-2009 |

EPO FORM P0461

Für nähere Einzelheiten zu diesem Anhang : siehe Amtsblatt des Europäischen Patentamts, Nr.12/82

Seite 1 von 2

**ANHANG ZUM EUROPÄISCHEN RECHERCHENBERICHT**
**ÜBER DIE EUROPÄISCHE PATENTANMELDUNG NR.**

EP 20 15 9493

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-05-2020

| Im Recherchenbericht angeführtes Patentdokument | Datum der Veröffentlichung | Mitglied(er) der Patentfamilie | Datum der Veröffentlichung |
|---|---|---|---|
| | | WO 2007037400 A1 | 05-04-2007 |
| US 2006036344 A1 | 16-02-2006 | KEINE | |
| WO 2013141797 A2 | 26-09-2013 | EP 2828807 A2 | 28-01-2015 |
| | | WO 2013141797 A2 | 26-09-2013 |
| EP 3155490 A1 | 19-04-2017 | CN 106575116 A | 19-04-2017 |
| | | EP 3155490 A1 | 19-04-2017 |
| | | JP 6411628 B2 | 24-10-2018 |
| | | JP 2017522670 A | 10-08-2017 |
| | | US 2017213195 A1 | 27-07-2017 |
| | | WO 2016012056 A1 | 28-01-2016 |
| US 2019179299 A1 | 13-06-2019 | AU 2017309374 A1 | 21-02-2019 |
| | | BR 112019002671 A2 | 06-08-2019 |
| | | CL 2019000333 A1 | 26-04-2019 |
| | | PE 20190516 A1 | 10-04-2019 |
| | | US 2019179299 A1 | 13-06-2019 |
| | | WO 2018029573 A1 | 15-02-2018 |
| US 2019196430 A1 | 27-06-2019 | CN 110011881 A | 12-07-2019 |
| | | KR 20190076534 A | 02-07-2019 |
| | | US 2019196430 A1 | 27-06-2019 |
| | | WO 2019124909 A1 | 27-06-2019 |
| US 2009132321 A1 | 21-05-2009 | KEINE | |

EPO FORM P0461

Für nähere Einzelheiten zu diesem Anhang : siehe Amtsblatt des Europäischen Patentamts, Nr.12/82

Seite 2 von 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **TANG YONG.** Extended Weibull distributions in reliability engineering. National University of Singapore, 2004

- **JEAN-CLAUDE FRANCASTEL ; DUNOD.** Ingénierie de la maintenance : De la conception à l'exploitation d'un bien. L'Usine Nouvelle, 2009